# EUROPEAN PATENT SPECIFICATION

(11) **EP 2 929 484 B1**
(45) Date of publication and mention of the grant of the patent: **29.05.2019**
(21) Application number: 13811659.5
(22) Date of filing: 25.11.2013
(51) Int. Cl.: G06K 7/10, G06K 7/01

(54) **ARRANGEMENT FOR AND METHOD OF OPTIMIZING THE MONITORING OF A CONTROLLED AREA WITH A RADIO FREQUENCY IDENTIFICATION (RFID) TAG READER HAVING A PHASED ANTENNA ARRAY**
ANORDNUNG UND VERFAHREN ZUR OPTIMIERUNG DER ÜBERWACHUNG EINES KONTROLLIERTEN BEREICHS MIT EINEM RFID-ETIKETTENLESER MIT PHASENGESTEUERTER ANTENNENGRUPPE
AGENCEMENT POUR ET PROCÉDÉ D'OPTIMISATION DE LA SURVEILLANCE D'UNE ZONE CONTRÔLÉE AVEC UN LECTEUR D'ÉTIQUETTE D'IDENTIFICATION RADIOFRÉQUENCE (RFID) AYANT UN RÉSEAU D'ANTENNES PILOTÉ EN PHASE

(30) Priority: 10.12.2012 US 201213709351
(43) Date of publication of application: 14.10.2015
(73) Proprietor: Symbol Technologies, LLC, Holtsville, NY 11742 (US)
(72) Inventor: BEKRITSKY, Benjamin J.,, 71724 Modin (IL); SESHADRI, Neeral,, Bangalore 560076 (IN)
(74) Representative: LKGLOBAL Lorenz & Kopf PartG mbB Patentanwälte
(86) International application number: PCT/US2013/071598
(87) International publication number: WO 2014/092991

(56) References cited:
- US-A1- 2006 255 951
- US-A1- 2007 052 540
- US-A1- 2007 262 870
- US-A1- 2011 169 613
- US-B1- 7 118 036

## Description

### FIELD OF THE DISCLOSURE

The present disclosure relates generally to an arrangement for, and a method of, monitoring a controlled area containing items associated with radio frequency identification (RFID) tags, by using an RFID tag reader having a phased antenna array, especially for inventory control of the RFID-tagged items, and, more particularly, to optimizing the monitoring and the reader performance.

### BACKGROUND

Radio frequency identification (RFID) technology is becoming increasingly important for logistics concerns, material handling and inventory management in retail stores, warehouses, distribution centers, buildings, and like controlled or confined areas. An RFID system typically includes at least one RFID reader, also known as an RFID interrogator, and an RFID tag that is usually attached to, or associated with, an individual item, or to a package for the item. The RFID reader interrogates one or more RFID tags in its coverage range by transmitting a radio frequency (RF) signal, and the RFID tag, which senses the interrogating RF signal, responds by transmitting a return RF signal. The RFID tag either generates the return RF signal originally, or reflects back a portion of the interrogating RF signal in a process known as backscatter. The return RF signal may further encode data stored internally in the tag, such as a number. The return signal is demodulated and decoded by the reader, which thereby identifies, counts, or otherwise interacts with the associated item. The decoded data can denote a serial number, a price, a date, a destination, other attribute(s), or any combination of attributes, and so on.

The RFID tag typically includes an antenna, a power management section, a radio section, and frequently a logic section, a memory, or both. In earlier RFID tags, the power management section included an energy storage device, such as a battery. An RFID tag with an active transmitter is known as an active tag. An RFID tag with a passive transmitter is known as a passive tag and backscatters. Advances in semiconductor technology have miniaturized the electronics so much that an RFID tag can be powered solely by the RF signal it receives. An RFID tag that backscatters and is powered by an on-board battery is known as a semi-passive tag.

The RFID system is often used in an inventory monitoring application. For example, in order to take inventory of RFID-tagged items in a retail store, it is known to position at least one RFID reader overhead in a controlled area, and then, to allow each overhead reader to automatically read whatever tagged items are in the coverage range of each reader. For superior RF coverage, it is known to provide each overhead reader with a phased antenna array that generates a multitude of beams that are steered both in azimuth, over an angle of 360E, and in elevation, over an angle of about 180E.

As advantageous as such known inventory-taking RFID systems utilizing phased antenna arrays have been, it has proven difficult to optimize reader performance, because there are hundreds of beams for each reader, and manually configuring each beam properly for optimal performance is cumbersome. Also, time is wasted if each beam has to read the same tag, to obtain the same results, over and over again. Furthermore, using the same performance criteria to read different types of tags and/or tags in different locations, is inefficient. For example, some types of tags may wish to be interrogated less quickly and more robustly than other types of tags, while other types of tags may wish to be interrogated more quickly and less robustly than other types of tags. Controlled area layouts often change, and an overhead RFID reader that cannot dynamically change its performance will not enjoy a competitive presence in the marketplace.

Accordingly, there is a need to automatically configure at least one RFID reader to efficiently and dynamically monitor RFID-tagged items in the controlled area in an optimized manner. US 2011/169613 A1 discloses a portable RFID reader including an active antenna array with a plurality of antenna elements to receive RFID signals from RFID devices and is considered as closest prior art.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a schematic view of an exemplary radio frequency identification (RFID) tag reader having a phased array of antennas in accordance with the present disclosure.
FIG. 2 is a perspective, schematic view of an arrangement for, and a method of, monitoring a controlled area with radio frequency (RF) coverage, especially for inventory control of RFID-tagged items, by using two phased array readers of the type illustrated in FIG.1.
FIG. 3 is a flow chart depicting steps performed in accordance with optimizing the monitoring of the controlled area of FIG. 2.

Skilled artisans will appreciate that elements in the figures are illustrated for simplicity and clarity and have not necessarily been drawn to scale. For example, the dimensions and locations of some of the elements in the figures may be exaggerated relative to other elements to help to improve understanding of embodiments of the present invention.

The arrangement and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

One aspect of this disclosure relates to an arrangement for monitoring a controlled area containing items associated with radio frequency identification (RFID) tags. The controlled area may be a retail store, a warehouse, or any other confined area in which RFID-tagged items are to be monitored. The arrangement includes an RFID tag reader having a phased antenna array for generating a multitude of beams to interrogate the tags in the controlled area, and a controller operatively connected to the tag reader. The controller is operative for collecting data from the interrogated tags, for automatically configuring the beams based on the collected data, and for processing the configured beams to optimize the monitoring of the controlled area.

Advantageously, the controller is operative for identifying tags of a same type, for determining subsets of the beams that each identify the same type of tag, for grouping the subsets of the beams into a plurality of zones each identifying the items associated with the same type of tag, and for processing only the zones to optimize the monitoring of the controlled area. The controller is further operative for collecting the data over multiple reads, for identifying when the collected data is the same over the multiple reads, and for rejecting the data collected from any beam, or any zone, when the collected data is identified as being the same over the multiple reads.

The controller is also operative for identifying tags of different types, for determining subsets of the beams that identify the different types of tags, for grouping the subsets of the beams into a plurality of zones each identifying the items associated with the different types of tags, for processing each zone with performance criteria, and for changing the performance criteria of any zone as a function of the type and/or location of the tag that is in that respective zone.

A method, in accordance with another aspect of this disclosure, relates to monitoring a controlled area containing items associated with radio frequency identification (RFID) tags. The method is performed by generating a multitude of beams from a phased antenna array of an RFID tag reader to interrogate the tags in the controlled area, collecting data from the interrogated tags, automatically configuring the beams based on the collected data, and processing the configured beams to optimize the monitoring of the controlled area.

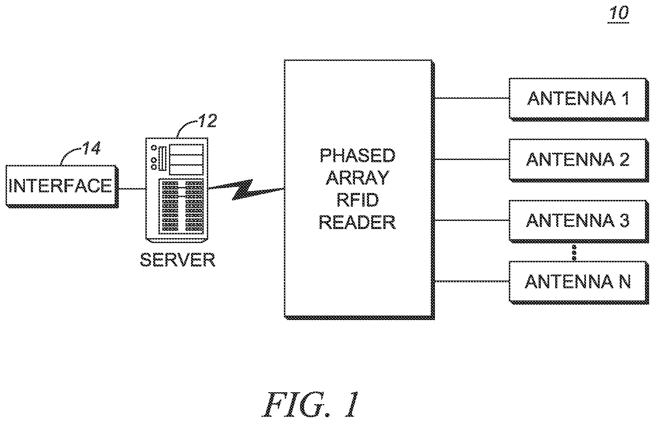

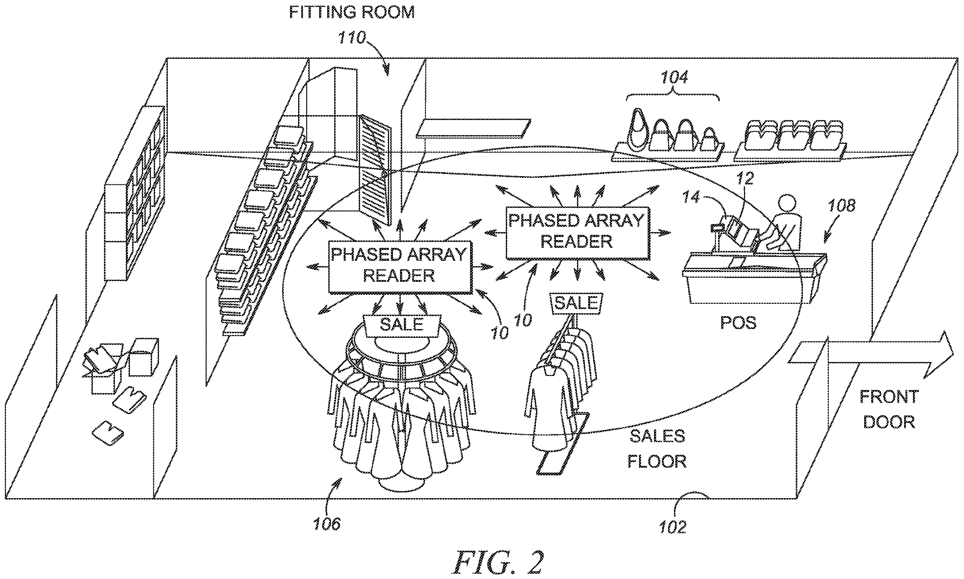

Turning now to the drawings, FIG. 1 depicts a simplified depiction of a phased array radio frequency identification (RFID) tag reader 10 having a plurality of antennas 1, 2, 3 ... , N. The reader 10 is connected to a server or controller 12 and a user interface 14. The reader 10, also known as an RFID interrogator, has an RF transceiver, and the antennas 1, 2, 3 ... , N emit a multitude of beams or RF waves generated by the transceiver over a coverage range in which RFID-tagged items, e.g., handbags 104, and clothing 106, as well as other items, as depicted in FIG. 2, can be read. The number of beams generated by the antennas may be any integer number, N, where N may be over a hundred or more. In one advantageous embodiment, over four hundred beams are generated by the reader 10.

The controller 12 comprises one or more computers or servers that is in wired, wireless, direct, or networked communication with the interface 14 and with the reader 10. The interface 14 provides a human/machine interface, e.g., a graphical user interface (GUI), that presents information in pictorial and/or textual form (e.g., representations of locations of the reader 10 and the RFID-tagged items 104, 106) to a human user, and to initiate and/or alter the execution of various processes that may be performed by the controller 12. The controller 12 and the interface 14 may be separate hardware devices and include, for example, a computer, a monitor, a keyboard, a mouse, a printer, and various other hardware peripherals, or may be integrated into a single hardware device, such as a mobile smartphone, or a portable tablet, or a laptop computer. Furthermore, the user interface 14 can be in a smartphone, or tablet, etc., while the controller 12 may be a computer, either located at a controlled area 102 (see FIG. 2) containing the RFID-tagged items 104, 106, or remotely at some other location, or can be hosted in a cloud server. The controller 12 advantageously includes a wireless RF transceiver that communicates with the reader 10. For example, Wi-Fi and Bluetooth® are open wireless standards for exchanging data between electronic devices.

FIG. 2 depicts an exemplary depiction of a pair of the readers 10 deployed in a controlled area 102 of a retail sales floor having a point-of-sale (POS) station 108 at which the controller 12 and the interface 14 may be provided, a fitting room 110, and a plurality of RFID-tagged items 104, 106, e.g., clothes, handbags, etc., arranged on shelves, hangers, racks, on the floor, etc. Each RFID-tagged item 104, 106 is preferably associated with a passive tag for cost reasons. To simplify the drawing, only two deployed readers 10 have been illustrated, and each reader 10 has been illustrated as being preferably located overhead on the ceiling in the controlled area 102. More or less than two readers 10 could be deployed, and not necessarily on the ceiling. Each reader 10 may be powered from an electrical outlet, powered over the Ethernet (POE), or can be battery powered.

The controller 12 is operative for processing the beams from each reader both in azimuth over an angular range of 360E, and in elevation over an angular spread of about 180E. Rather than manually configuring each beam, one aspect of this disclosure is to have the controller 12 collect data from the interrogated tags, and to have the controller 12 automatically configure the beams based on the collected data, and to have the controller 12 process the configured beams in order to optimize the monitoring of the controlled area. When more than one reader 10 is employed, the controller 12 automatically configures the beams from all the readers 10, and processes the configured beams from all the readers 10.

More specifically, when the controller 12 collects the data from all the tags, it can identify tags of a same type, which, in turn, identifies the corresponding items of the same type. For example, by looking at the collected data, the controller 12 can determine all the tags that are associated with the handbags 104. The controller 12 can thus determine which of the beams identify the same type of tag. For example, the controller 12 can determine that a subset of the beams, for example, ten of the beams, identify the handbags 104, and can then group the subset of the ten beams into a handbag zone identifying the handbags 104. The controller 12 need only process only the handbag zone, rather than each of the ten individual beams, in order to monitor the handbags 104 in the controlled area.

This process is repeated, for example, by determining which of the beams identify the clothing 106, and then grouping all the beams that identify the clothing 106 into another clothing zone, whereupon the controller need only process this other clothing zone in order to monitor the clothing 106 in the controlled area. Thus, the monitoring of the controlled area is optimized, because only the handbag zone, the clothing zone, etc., are processed, rather than having to process each and every beam.

The controller 12 is further operative for collecting the data over multiple reads, and for identifying when the collected data is the same over the multiple reads. When a beam, or a zone, consistently reads the same tags over and over again, reading time is wasted. Hence, the controller 12 processes each beam, or each zone, and then discards or rejects the data collected from any beam, or any zone, when the collected data is identified as being the same over the multiple reads. This further optimizes reader performance.

The controller 12 is also operative for identifying tags of different types, for determining subsets of the beams that identify the different types of tags, for grouping the subsets of the beams into a plurality of zones each identifying the items associated with the different types of tags, for processing each zone with performance criteria, e.g., read time, read priority, and read processing intensity, and for changing the performance criteria of any zone as a function of the type, or location, of the tag that is in that respective zone.

For example, as previously noted, the controller 12 can process the handbag zone for the handbags 104, and can also process the clothing zone for the clothing 106. Each of these different zones may be read over a certain read time and with a certain processing intensity or robustness. If the handbags 104, or some other items, were located in a "bulk inventory area", then the read time can be lengthened, and the read processing intensity will be more robust, because time is not so critical in the bulk inventory area . If the handbags 104, or some other items, were located in a "portal area", then the read time can be shortened, and the read processing intensity will be less robust in the portal area, because time is more critical as such items pass relatively quickly through a portal. The priority of which zones are to be read in a particular order can be based on the type of the tag and/or the type of area in which the tags are located.

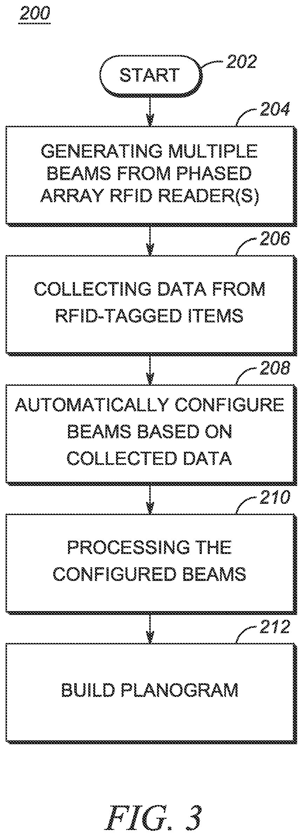

As described above, and as shown in the flow chart 200 of FIG. 3, beginning at start block 202, each RFID reader 10 tracks the RFID-tagged items 104, 106 in the controlled area 102 by generating a multitude of beams to interrogate the tags in the controlled area in block 204. The controller 12 collects data from the interrogated tags in block 206, automatically configures the beams based on the collected data in block 208, and processes the configured beams in block 210 to optimize the monitoring of the controlled area 102. Advantageously, the controller 12 can be used to build a map or planogram of the controlled area 102, in which the locations of the RFID-tagged items 104, 106, as well as the location of each reader 10, are depicted by the interface 14.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. For example, it is possible to have the readers directly communicate with one another, rather than relying on tag activation. This completely different approach ensures a much larger distance between the readers, but requires the readers to be operational at the same time.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements, but may include other elements not expressly listed or inherent to such process, method, article, or apparatus. An element proceeded by "comprises ... a," "has ... a," "includes ... a," or "contains ... a," does not, without more constraints, preclude the existence of additional identical elements in the process, method, article, or apparatus that comprises, has, includes, or contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1%, and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors, and field programmable gate arrays (FPGAs), and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein, will be readily capable of generating such software instructions and programs and ICs with minimal experimentation.

## Claims

1. An arrangement for monitoring a controlled area (102) containing items (104, 106) associated with radio frequency identification (RFID) tags, comprising:
an RFID tag reader (10) having a phased antenna array for generating (204) a multitude of beams to interrogate the tags in the controlled area (102);
**characterized by** a controller (12) operatively connected to the tag reader (10) for collecting (206) data identifying the type of tag from the interrogated tags, for automatically configuring the beams both in azimuth over a predetermined angular range and in elevation over a predetermined angular spread based on the collected data for processing the configured beams to optimize the monitoring of the controlled area (102).

2. The arrangement of claim 1, wherein the controller (12) is operative for collecting the tag type data over multiple reads, for identifying when the tag type collected data identifies the same tags over the multiple reads, and for rejecting the tag type data collected from any beam when the collected data identifies the same tags over the multiple reads.

3. The arrangement of claim 1, wherein the controller (12) is operative for identifying tags of a same type, for determining subsets of the beams that each identify the same type of tag, for grouping the subsets of the beams into a plurality of zones each identifying the items associated with the same type of tag, and for processing only the zones to optimize the monitoring of the controlled area.

4. The arrangement of claim 3, wherein the controller (12) is operative for collecting the data over multiple reads, for identifying when the collected data is the same over the multiple reads, and for rejecting the data collected from any zone when the collected data is identified as being the same over the multiple reads.

5. The arrangement of claim 1, wherein the controller (12) is operative for identifying tags of different types, for determining subsets of the beams that identify the different types of tags, for grouping the subsets of the beams into a plurality of zones each identifying the items associated with the different types of tags, for processing each zone with performance criteria, and for changing the performance criteria of any zone as a function of the type of tag that is in that respective zone.

6. The arrangement of claim 1, wherein the controller (12) is operative for building a planogram of the controlled area (102), in which the locations of the items (104, 106) are depicted in the controlled area (102).

7. The arrangement of claim 1, and further comprising another RFID tag reader (10) having another phased antenna array for generating another multitude of beams to interrogate the tags in the controlled area (102), and wherein the controller (12) is operative for automatically configuring the beams from both of the readers (10) based on the collected data, and for processing the configured beams from both of the readers to optimize the monitoring of the controlled area (102).

8. A method of monitoring a controlled area (102) containing items (104, 106) associated with radio frequency identification (RFID) tags, comprising:
generating (204) a multitude of beams from a phased antenna array of an RFID tag reader (10) to interrogate the tags in the controlled area;
collecting (206) data identifying the type of tag from the interrogated tags;
automatically configuring (208) the beams both in azimuth over a predetermined angular range and in elevation over a predetermined angular spread based on the collected data for processing (210) the configured beams to optimize the monitoring of the controlled area.

9. The method of claim 8, wherein the collecting of the tag type data is performed over multiple reads, and identifying when the tag type collected data identifies the same tags over the multiple reads, and rejecting the tag type collected data from any beam when the collected data identifies the same tags over the multiple reads.

10. The method of claim 8, and identifying tags of a same type, and determining subsets of the beams that each identify the same type of tag, and grouping the subsets of the beams into a plurality of zones each identifying the items associated with the same type of tag, and wherein the processing is performed by only processing the zones to optimize the monitoring of the controlled area.

11. The method of claim 10, wherein the collecting of the data is performed over multiple reads, and identifying when the collected data is the same over the multiple reads, and rejecting the data collected from any zone when the collected data is identified as being the same over the multiple reads.

12. The method of claim 8, and identifying tags of different types, and determining subsets of the beams that identify the different types of tags, and grouping the subsets of the beams into a plurality of zones each identifying the items associated with the different types of tags, and processing of each zone with performance criteria, and changing the performance criteria of any zone as a function of the type of tag that is in that respective zone.

13. The method of claim 8, and building a planogram of the controlled area, in which the locations of the items are depicted in the controlled area (102).

14. The method of claim 8, and further comprising generating another multitude of beams from another phased antenna array of another RFID tag reader (10) to interrogate the tags in the controlled area (102), and automatically configuring the beams from both of the readers (10) based on the collected data, and processing the configured beams from both of the readers (10) to optimize the monitoring of the controlled area.

## Patentansprüche

1. Anordnung zur Überwachung eines kontrollierten Bereichs (102), der Gegenstände (104, 106) enthält, die Etiketten für Radiofrequenzidentifizierung (RFID) zugeordnet sind, wobei vorgesehen sind:
ein RFID-Etikettenleser (10), der eine phasengesteuerte Antennengruppe zur Erzeugung (204) mehrerer Richtstrahlen zur Abfrage der Etiketten in dem kontrollierten Bereich (102) aufweist; **gekennzeichnet durch**
eine Steuerung (12), die betriebsmäßig mit dem Etikettenleser (10) verbunden ist, um Daten, welche die Art des Etiketts von den abgefragten Etiketten identifizieren, zu sammeln (206), zum automatischen Konfigurieren der Richtstrahlen sowohl bezüglich Azimut über einen vorbestimmten Winkelbereich als auch bezüglich Elevation über eine vorbestimmte Winkelverteilung auf Grundlage der gesammelten Daten, zur Verarbeitung der konfigurierten Richtstrahlen zum Optimieren der Überwachung des kontrollierten Bereichs (102).

2. Anordnung nach Anspruch 1, bei welcher die Steuerung (12) dazu funktionsfähig ist, um die Etikettentypdaten über mehrere Lesevorgänge zu sammeln, um zu identifizieren, wenn die gesammelten Etikettentypdaten dieselben Etiketten über die mehreren Lesevorgänge identifizieren, und um die Etikettentypdaten zurückzuweisen, die von irgendeinem Richtstrahl gesammelt werden, wenn die gesammelten Daten dieselben Etiketten über die mehreren Lesevorgänge identifizieren.

3. Anordnung nach Anspruch 1, bei welcher die Steuerung (12) dazu funktionsfähig ist, um Etiketten eines selben Typs zu identifizieren, zur Bestimmung von Untergruppen der Richtstrahlen, die jeweils denselben Typ von Etikett identifizieren, zum Gruppieren der Untergruppen der Richtstrahlen in mehrere Zonen, die jeweils die Gegenstände identifizieren, die demselben Typ von Etikett zugeordnet sind, und zum Verarbeiten nur der Zonen, zum Optimieren der Überwachung des kontrollierten Bereichs.

4. Anordnung nach Anspruch 3, bei welcher die Steuerung (12) dazu funktionsfähig ist, um die Daten über mehrere Lesevorgänge zu sammeln, zum Identifizieren, wenn die gesammelten Daten dieselben über die mehreren Lesevorgänge sind, und zum Zurückweisen der von irgendeiner Zone gesammelten Daten, wenn die gesammelten Daten als dieselben über die mehreren Lesevorgänge identifiziert werden.

5. Anordnung nach Anspruch 1, bei welcher die Steuerung (12) dazu funktionsfähig ist, um Etiketten unterschiedlicher Typen zu identifizieren, zur Bestimmung von Untergruppen der Richtstrahlen, welche die unterschiedlichen Typen von Etiketten identifizieren, zum Gruppieren der Untergruppen der Richtstrahlen in mehrere Zonen, die jeweils die Gegenstände identifizieren, die den unterschiedlichen Typen von Etiketten zugeordnet sind, zum Verarbeiten jeder Zone mit Leistungskriterien, und zum Ändern der Leistungskriterien irgendeiner Zone als Funktion des Typs von Etikett, das sich in der jeweiligen Zone befindet.

6. Anordnung nach Anspruch 1, bei welcher die Steuerung (12) dazu funktionsfähig ist, um ein Planogramm des kontrollierten Bereichs (102) aufzubauen, in welchem die Orte der Gegenstände (104, 106) in dem kontrollierten Bereich (102) dargestellt sind.

7. Anordnung nach Anspruch 1, bei welcher ein weiterer RFID-Etikettenleser (10) vorgesehen ist, der eine andere phasengesteuerte Antennengruppe aufweist, um andere mehrere Richtstrahlen zum Abfragen der Etiketten in dem kontrollierten Bereich (102) zu erzeugen, wobei die Steuerung (12) dazu funktionsfähig ist, automatisch die Richtstrahlen von beiden Lesern (10) auf Grundlage der gesammelten Daten zu konfigurieren, und um die konfigurierten Richtstrahlen von beiden Lesern zu verarbeiten, um die Überwachung des kontrollierten Bereichs (102) zu optimieren.

8. Verfahren zur Überwachung eines kontrollierten Bereichs (102), der Gegenstände (104, 106) enthält, die Etiketten für Radiofrequenzidentifizierung (RFID) zugeordnet sind, wobei vorgesehen sind:
Erzeugung (204) mehrerer Richtstrahlen durch eine phasengesteuerte Antennengruppe eines RFID- Etikettenlesers (10) zur Abfrage der Etiketten in dem kontrollierten Bereich;
Sammeln (206) von Daten, welche den Typ von Etikett von den abgefragten Etiketten identifizieren;
automatisches Konfigurieren (208) der Richtstrahlen sowohl bezüglich Azimut über einen vorbestimmten Winkelbereich als auch bezüglich Elevation über eine vorbestimmte Winkelverteilung auf Grundlage der gesammelten Daten, zur Verarbeitung (210) der konfigurierten Richtstrahlen zum Optimieren der Überwachung des kontrollierten Bereichs.

9. Verfahren nach Anspruch 8, bei welchem das Sammeln der Etikettentypdaten über mehrere Lesevorgänge durchgeführt wird, und identifiziert wird, wenn die gesammelten Etikettentypdaten dieselben Etiketten über die mehreren Lesevorgänge identifizieren, und die gesammelten Etikettentypdaten von irgendeinem Richtstrahl zurückgewiesen werden, wenn die gesammelten Daten dieselben Etiketten über die mehreren Lesevorgänge identifizieren.

10. Verfahren nach Anspruch 8, bei welchem Etiketten eines selben Typs identifiziert werden, und Untergruppen der Richtstrahlen bestimmt werden, die jeweils denselben Typ von Etikett identifizieren, und die Untergruppen der Richtstrahlen in mehrere Zonen gruppiert werden, die jeweils die Gegenstände identifizieren, die demselben Typ von Etikett zugeordnet sind, und wobei die Verarbeitung nur durch Verarbeiten der Zonen durchgeführt wird, zum Optimieren der Überwachung des kontrollierten Bereichs.

11. Verfahren nach Anspruch 10, bei welchem das Sammelnd der Daten über mehrere Lesevorgänge durchgeführt wird, und identifiziert wird, wenn die gesammelten Daten dieselben über die mehreren Lesevorgänge sind, und die von irgendeiner Zone gesammelten Daten zurückgewiesen werden, wenn die gesammelten Daten als dieselben über die mehreren Lesevorgänge identifiziert werden.

12. Verfahren nach Anspruch 8, bei welchem Etiketten unterschiedlicher Typen identifiziert werden, und Untergruppen der Richtstrahlen bestimmt werden, welche die unterschiedlichen Typen von Etiketten identifizieren, und die Untergruppen der Richtstrahlen in mehrere Zonen gruppiert werden, die jeweils die Gegenstände identifizieren, die den unterschiedlichen Typen von Etiketten zugeordnet sind, und jede Zone mit Leistungskriterien verarbeitet wird, und die Leistungskriterien irgendeiner Zone geändert werden als Funktion des Typs von Etikett, das sich in der jeweiligen Zone befindet.

13. Verfahren nach Anspruch 8, bei welchem ein Planogramm des kontrollierten Bereichs aufgebaut wird, in welchem die Orte der Gegenstände in dem kontrollierten Bereich (102) dargestellt sind.

14. Verfahren nach Anspruch 8, bei welchem weiterhin mehrere Richtstrahlen von einer anderen phasengesteuerten Antennengruppe eines anderen RFID-Etikettenlesers (10) erzeugt werden, um die Etiketten in dem kontrollierten Bereich (102) abzufragen, und die Richtstrahlen von beiden der Leser (10) auf Grundlage der gesammelten Daten automatisch konfiguriert werden, und die konfigurierten Richtstrahlen von beiden der Leser (10) verarbeitet werden, um die Überwachung des kontrollierten Bereichs zu optimieren.

## Revendications

1. Agencement de surveillance d'une zone contrôlée (102) contenant des éléments (104, 106) associés à des étiquettes d'identification par radiofréquence (RFID), comprenant :
un lecteur d'étiquettes RFID (10) ayant un réseau d'antennes pilotées en phase pour générer (204) une multitude de faisceaux pour interroger les étiquettes dans la zone contrôlée (102) ;
**caractérisé par**
un contrôleur (12) connecté opérationnellement au lecteur d'étiquettes (10) pour collecter (206) des données identifiant les types d'étiquettes parmi les étiquettes interrogées, pour configurer automatiquement les faisceaux à la fois en azimut sur une plage angulaire prédéterminée et en élévation sur une ouverture angulaire prédéterminée sur la base des données collectées pour traiter les faisceaux configurés afin d'optimiser la surveillance de la zone contrôlée (102).

2. Agencement selon la revendication 1, dans lequel le contrôleur (12) est opérationnel pour connecter les données de type d'étiquette sur des lectures multiples, pour identifier quand les données collectées par type d'étiquettes identifient les mêmes étiquettes sur les lectures multiples et pour rejeter les données de type d'étiquette collectées à partir de n'importe quel faisceau lorsque les données collectées identifient les mêmes étiquettes sur les lectures multiples.

3. Agencement selon la revendication 1, dans lequel le contrôleur (12) est opérationnel pour identifier les étiquettes d'un même type, pour déterminer des sous-ensembles des faisceaux qui identifient chacun le même type d'étiquettes, pour grouper le sous-ensemble des faisceaux en une pluralité de zones identifiant chacune les éléments associés au même type d'étiquette et pour traiter uniquement les zones afin d'optimiser la surveillance de la zone contrôlée.

4. Agencement selon la revendication 3, dans lequel le contrôleur (12) est opérationnel pour collecter les données sur des lectures multiples, pour identifier quand les données collectées sont les mêmes sur les lectures multiples et pour rejeter les données collectées de n'importe quelle zone lorsque les données collectées sont identifiées comme étant les mêmes sur les lectures multiples.

5. Agencement selon la revendication 1, dans lequel le contrôleur (12) est opérationnel pour identifier les étiquettes de types différents, pour déterminer les sous-ensembles des faisceaux qui identifient les types d'étiquettes différents, pour grouper les sous-ensembles des faisceaux en une pluralité de zones identifiant chacune l'événement associé aux différents types d'étiquettes, pour traiter chaque zone avec des critères de performance et pour changer les critères de performance de n'importe quelle zone en fonction du type d'étiquette qui est dans cette zone respective.

6. Agencement selon la revendication 1, dans lequel le contrôleur (12) est opérationnel pour construire un planogramme de la zone contrôlée (102), dans lequel les localisations des éléments (104, 106) sont représentées dans la zone contrôlée (102).

7. Agencement selon la revendication 1 et comprenant en outre un autre lecteur d'étiquettes RFID (10) ayant un autre réseau d'antennes pilotées en phase pour générer une autre multitude de faisceaux afin d'interroger les étiquettes dans la zone contrôlée (102) et dans lequel le contrôleur (12) est opérationnel pour configurer automatiquement les faisceaux provenant des deux lecteurs(10) sur la base des données collectées et pour traiter les faisceaux configurés provenant des deux lecteurs afin d'optimiser la surveillance de la zone contrôlée (102).

8. Procédé de surveillance d'une zone contrôlée (102) contenant des éléments (104, 106) associés à des étiquettes d'identification par radiofréquence (RFID), comprenant de :
générer (204) une multitude de faisceaux à partir d'un réseau d'antennes pilotées en phase d'un lecteur d'étiquettes RFID (10) afin d'interroger les étiquettes dans la zone contrôlée ;
collecter (206) des données identifiant le type d'étiquettes parmi les étiquettes interrogées ;
configurer automatiquement (208) les faisceaux à la fois en azimut sur une plage angulaire prédéterminée et en élévation sur une ouverture angulaire prédéterminée sur la base des données collectées pour traiter (210) les faisceaux configurés afin d'optimiser la surveillance de la zone contrôlée.

9. Procédé selon la revendication 8, dans lequel la collecte des données de type d'étiquette est effectuée sur des lectures multiples, et identifiant quand les données collectées par type d'étiquettes identifient les mêmes étiquettes sur les lectures multiples et rejetant les données collectées par type d'étiquettes de n'importe quel faisceau lorsque les données collectées identifient les mêmes étiquettes sur les lectures multiples.

10. Procédé selon la revendication 8, et l'identification des étiquettes d'un même type et la détermination des sous-ensembles des faisceaux qui identifient chacun le même type d'étiquettes et le groupage des sous-ensembles de faisceau en une pluralité de zones identifiant chacune les éléments associé au même type d'étiquette, et dans lequel le traitement est effectué en traitant uniquement les zones afin d'optimiser la surveillance de la zone contrôlée.

11. Procédé selon la revendication 10, dans lequel la collecte des données est effectuée sur des lectures multiples, et identifiant quand les données collectées sont les mêmes sur les lectures multiples et rejetant les données collectées de n'importe quelle zone lorsque les données collectées sont identifiées comme étant les mêmes sur les lectures multiples.

12. Procédé selon la revendication 8, et identifiant les étiquettes de type différent et déterminant des sous-ensembles de faisceaux qui identifient les différents types d'étiquettes et groupant les sous-ensembles des faisceaux en une pluralité de zones identifiant chacune les éléments associés aux différents types d'étiquettes et traitant chaque zone avec des critères de performance et changeant les critères de performance de n'importe quelle zone en fonction du type d'étiquette qui est dans cette zone respective.

13. Procédé selon la revendication 8, et formant un planogramme de la zone contrôlée, dans lequel les localisations les éléments sont représentées dans la zone contrôlée (102).

14. Procédé selon la revendication 8, et comprenant en outre de générer une autre multitude de faisceaux à partir d'un autre réseau d'antennes pilotées en phase d'un autre lecteur d'étiquettes RFID (10) afin d'interroger les étiquettes dans la zone contrôlée (102), et configurer automatiquement les faisceaux provenant des deux lecteurs (10) sur la base des données collectées et traiter les faisceaux configurés provenant des deux lecteurs (10) afin d'optimiser la surveillance de la zone contrôlée.
